(19) Europäisches Patentamt
European Patent Office
Office européen des brevets

(11) EP 4 718 556 A1

(12) **EUROPEAN PATENT APPLICATION**

(43) Date of publication:
**01.04.2026 Bulletin 2026/14**

(21) Application number: **25204451.6**

(22) Date of filing: **24.09.2025**

(51) International Patent Classification (IPC):
***H01M 10/052*** *(2010.01)* ***H01M 10/056*** *(2010.01)*

(52) Cooperative Patent Classification (CPC):
**H01M 10/056; H01M 10/052**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH LA MA MD TN**

(30) Priority: **25.09.2024 KR 20240130059**

(71) Applicants:
- **SK On Co., Ltd.**
  **Seoul 03161 (KR)**
- **Korea Research Institute of Chemical Technology**
  **Daejeon 34114 (KR)**

(72) Inventors:
- **PARK, Myung Soo**
  **34124 Daejeon (KR)**
- **RYU, Hye Min**
  **34124 Daejeon (KR)**
- **LEE, Han Sol**
  **34124 Daejeon (KR)**
- **KANG, Yong Ku**
  **34114 Daejeon (KR)**
- **SUK, Jung Don**
  **34114 Daejeon (KR)**
- **KIM, Se Hee**
  **34114 Daejeon (KR)**
- **AN, Eui Gyeong**
  **34114 Daejeon (KR)**
- **CHOI, Seung Ju**
  **34114 Daejeon (KR)**
- **NGUYEN, Manh Tien**
  **34114 Daejeon (KR)**

(74) Representative: **Prüfer & Partner mbB**
**Patentanwälte · Rechtsanwälte**
**Sohnckestraße 12**
**81479 München (DE)**

(54) **COMPOSITION FOR FORMING SOLID ELECTROLYTE, SOLID ELECTROLYTE AND LITHIUM SECONDARY BATTERY**

(57) A composition for forming a solid electrolyte according to embodiments of the present disclosure includes: a liquid electrolyte including a solvent containing a nitrile compound having an ether group, a first lithium salt including a borate compound, and a second lithium salt different from the first lithium salt; and a monomer having a polymerizable functional group. A solid electrolyte according to embodiments of the present disclosure includes a nitrile compound having an ether group, a first lithium salt including a borate compound, a second lithium salt different from the first lithium salt, and a polymer.

[FIG. 1]

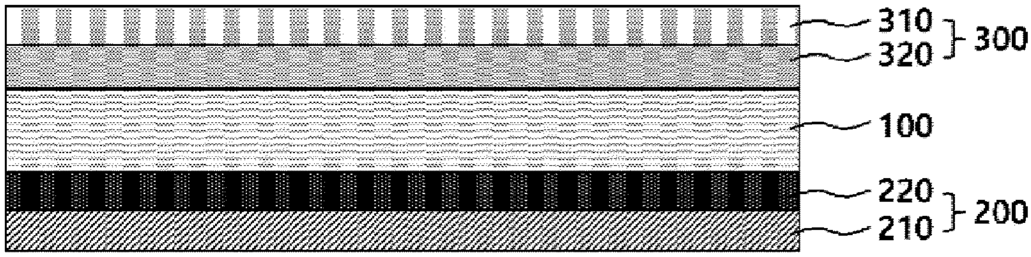


EP 4 718 556 A1

## Description

[BACKGROUND OF THE INVENTION]

1. Field of the Invention

The present disclosure relates to a composition for forming a solid electrolyte, a solid electrolyte, and a lithium secondary battery.

2. Description of the Related Art

Secondary batteries are batteries that can be repeatedly charged and discharged. With the development of information and communication and display industries, they have been widely applied as power sources for portable electronic communication devices, such as camcorders, mobile phones, and laptop PCs. In addition, battery packs including secondary batteries have recently been developed and applied as power sources for eco-friendly vehicles, such as hybrid vehicles.

Examples of secondary batteries may include a lithium secondary battery, a nickelcadmium battery, and a nickel-hydrogen battery. Among these, lithium secondary batteries are actively being researched and developed due to their high operating voltage, high energy density per unit weight, and advantages in charging speed and weight reduction.

Since commercially available lithium secondary batteries mainly use liquid electrolytes, there are safety issues such as leakage, ignition, and explosion due to sudden environmental changes, including temperature fluctuations, external impacts and the like. To address these problems, research has been conducted to solidify the electrolyte, thereby enhancing stability and increasing energy density.

All-solid-state batteries may include solid-state electrolytes such as gel polymers, oxides, sulfides, or composite polymers as the electrolyte. Accordingly, stability against ignition and explosion caused by external impacts or external environmental fluctuations may be enhanced.

[SUMMARY OF THE INVENTION]

An object of the present disclosure is to provide a composition for forming a solid electrolyte that achieves a solid electrolyte having improved electrochemical properties.

Another object of the present disclosure is to provide a solid electrolyte having improved electrochemical properties.

Still another object of the present disclosure is to provide a lithium secondary battery including the solid electrolyte.

A composition for forming a solid electrolyte according to the present disclosure includes a liquid electrolyte and a monomer having a polymerizable functional group. The liquid electrolyte includes a solvent including a nitrile compound having an ether group, a first lithium salt including a borate compound, and a second lithium salt different from the first lithium salt.

According to exemplary embodiments, the nitrile compound may include one or two ether groups and one or two nitrile groups.

According to exemplary embodiments, the nitrile compound may include an alkoxy group having 1 to 5 carbon atoms.

According to exemplary embodiments, the nitrile compound may include at least one selected from the group consisting of methoxypropionitrile, methoxybutyronitrile, and ethoxypropionitrile.

According to exemplary embodiments, the second lithium salt may include an imide compound including fluorine.

According to exemplary embodiments, the first lithium salt may include at least one selected from the group consisting of lithium tetrafluoroborate, lithium difluoro(oxalato)borate and lithium bis(oxalato)borate, and the second lithium salt may include lithium bis(trifluoromethanesulfonyl)imide or lithium bis(fluorosulfonyl)imide.

According to exemplary embodiments, the first lithium salt may have a molar concentration of 0.01 M to 0.4 M, and the second lithium salt may have a molar concentration of 0.5 M to 2 M.

According to exemplary embodiments, the ratio of the molar concentration of the second lithium salt to the molar concentration of the first lithium salt in the composition may be greater than 1 and not more than 20.

According to exemplary embodiments, the monomer having a polymerizable functional group may include at least one selected from the group consisting of bisphenol A ethoxylated di(meth)acrylate, ethylene glycol diacrylate, triethylene glycol diacrylate, trimethylolpropane ethoxylated triacrylate, (meth)acrylic acid, carboxyethyl acrylate, cyano(meth)acrylate, trimethylolpropane trimethacrylate, and pentaerythritol tetraacrylate.

According to exemplary embodiments, the content of the monomer may be 5 to 30 parts by weight, based on 100

parts by weight of the total of the weights of the liquid electrolyte and the monomer.

According to exemplary embodiments, the liquid electrolyte may further include at least one additive selected from the group consisting of an unsaturated cyclic carbonate compound, a fluorine-substituted cyclic carbonate compound, a sultone compound, a cyclic sulfate compound, a fluorine-substituted phosphate compound, and an oxalato-phosphate compound.

A solid electrolyte according to the present disclosure includes: a nitrile compound having an ether group; a first lithium salt including a borate compound; a second lithium salt different from the first lithium salt; and a polymer.

According to exemplary embodiments, the nitrile compound may include one or two ether groups and one or two nitrile groups.

According to exemplary embodiments, the nitrile compound may include an alkoxy group having 1 to 5 carbon atoms.

According to exemplary embodiments, the nitrile compound may include at least one selected from the group consisting of methoxypropionitrile, methoxybutyronitrile and ethoxypropionitrile.

According to exemplary embodiments, the second lithium salt may include an imide compound including fluorine.

According to exemplary embodiments, the first lithium salt may include at least one selected from the group consisting of lithium tetrafluoroborate, lithium difluoro(oxalato)borate and lithium bis(oxalato)borate, and the second lithium salt may include lithium bis(trifluoromethanesulfonyl)imide or lithium bis(fluorosulfonyl)imide.

According to exemplary embodiments, the solid electrolyte may further include at least one additive selected from the group consisting of unsaturated cyclic carbonate compounds, fluorine-substituted cyclic carbonate compounds, sultone compounds, cyclic sulfate compounds, fluorine-substituted phosphate compounds and oxalato-phosphate compounds.

A lithium secondary battery according to the present disclosure includes: a cathode; an anode disposed opposite to the cathode; and the solid electrolyte interposed between the cathode and the anode.

A solid electrolyte having high ionic conductivity may be achieved from the composition for forming a solid electrolyte according to exemplary embodiments of the present disclosure. Accordingly, the charge/discharge rate of the battery may be improved.

The solid electrolyte according to exemplary embodiments of the present disclosure may improve the stability of the anode, e.g., the lithium metal anode, and the solid electrolyte interface, thereby achieving a battery having improved electrochemical stability and improved rate characteristics.

A lithium secondary battery according to exemplary embodiments of the present disclosure may exhibit improved cycle life characteristics.

[BRIEF DESCRIPTION OF THE DRAWINGS]

The above and other objects, features and other advantages of the present disclosure will be more clearly understood from the following detailed description taken in conjunction with the accompanying drawings, in which:

FIG. 1 is a schematic cross-sectional view of a secondary battery according to an exemplary embodiment;
FIG. 2 is a graph showing the change in discharge capacity of the lithium secondary batteries of Examples 2 to 4 and Comparative Examples 1 to 3 with respect to the cycle number;
FIG. 3 is a graph showing the change in discharge capacity of the lithium secondary batteries of Examples 1, Examples 5 to 6, and Comparative Examples 1 to 3 with respect to the cycle number;
FIGS. 4 to 7 are graphs showing the charge-discharge characteristic curves of the lithium secondary batteries of Examples 5 and 6 and Comparative Examples 1 and 2, respectively, with respect to the cycle number;
FIG. 8 is a graph showing the change in discharge capacity of the lithium secondary batteries of Examples 1 to 6 and Comparative Examples 1 and 3, with respect to the cycle number and rate;
FIG. 9 is a graph showing the change in discharge capacity of the lithium secondary batteries of Example 7 and Comparative Examples 2 and 3, with respect to the cycle number and rate; and
FIG. 10 is a graph showing the change in discharge capacity of a lithium-ion battery including the solid electrolyte of Example 7, with respect to the cycle number.

[DETAILED DESCRIPTION OF THE INVENTION]

A composition for forming a solid electrolyte according to the present disclosure includes: a liquid electrolyte including a solvent containing a nitrile compound and a lithium salt; and a monomer having a polymerizable functional group. In addition, a solid electrolyte according to the present disclosure is formed from the composition for forming a solid electrolyte, and a lithium secondary battery according to the present disclosure includes the solid electrolyte.

Hereinafter, embodiments of the present disclosure will be described in detail. However, these are merely

illustrative and the present disclosure is not limited to the specific embodiments described as examples.

As used herein, the term "solid electrolyte" may be used as a concept in contrast to a liquid electrolyte. For example, the solid electrolyte may include a quasi-solid electrolyte, a gel polymer electrolyte, or a semi-solid electrolyte.

As used herein, the term "composition for forming a solid electrolyte" may include a composition for forming a quasi-solid electrolyte, a composition for forming a gel polymer electrolyte, or a composition for forming a semi-solid electrolyte.

According to exemplary embodiments, the composition for forming a solid electrolyte (hereinafter, also abbreviated as "composition") includes a liquid electrolyte and a monomer.

The liquid electrolyte includes a solvent and a lithium salt. The liquid electrolyte may prevent the hardness of the solid electrolyte from increasing excessively and may serve as a medium through which lithium ions migrate.

The solvent includes a nitrile compound having an ether group. The ether group may improve the solubility of the lithium salt. In addition, the stability of the interface between the anode (e.g., a lithium metal anode) and the solid electrolyte may be improved, and the cycle life characteristics of the battery may be enhanced.

Additionally, the nitrile group of the nitrile compound, as a highly polar functional group, may reduce the volatility of the solvent and improve the ionic conductivity of the solid electrolyte. Since the nitrile compound does not decompose or cause side reactions even at high voltages, the electrochemical stability at high voltages may be improved.

The nitrile compound may include at least one ether group and at least one nitrile group. For example, the nitrile compound may include one or two ether groups and one or two nitrile groups. If the nitrile compound includes two ether groups, the ether groups may be linked by an alkylene group.

According to exemplary embodiments, the nitrile compound may include an alkoxy group having 1 to 5 carbon atoms. For example, the nitrile compound may include a methoxy group or an ethoxy group.

For example, the nitrile compound may be represented by Formula 1 below.

[Formula 1]

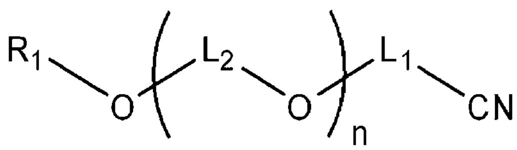

In Formula 1, $L_1$ and $L_2$ may each be a substituted or unsubstituted alkylene group having 1 to 3 carbon atoms, R1 may be a substituted or unsubstituted alkyl group having 1 to 3 carbon atoms, and n may be 0 or an integer from 1 to 2.

As used herein, "substituted" means that any hydrogen is replaced by a substituent. Non-limiting examples of such substituents may include functional groups such as halogen, hydroxyl, carboxyl, amine, amide, cyano, thiol, and sulfonic acid groups.

For example, in Formula 1, $L_1$ may be a methylene, ethylene, or propylene group.

For example, in Formula 1, $L_2$ may be a methylene or ethylene group.

For example, in Formula 1, $R_1$ may be a methyl or ethyl group.

According to exemplary embodiments, the nitrile compound may include methoxypropionitrile, methoxybutyronitrile, ethoxypropionitrile, or the like.

According to exemplary embodiments, the nitrile compound may have a Hansen solubility parameter ($\delta_T$) of 17.7 $MPa^{0.5}$ to 26.1 $MPa^{0.5}$.

The Hansen solubility parameter is a parameter for the solubility of a specific substance, which is determined by considering the dispersion force, dipole-dipole interaction, and hydrogen bonding force of the specific substance, and may be represented by Equation 1 below.

[Equation 1]

$$\delta_T = \sqrt{\delta_d^2 + \delta_p^2 + \delta_h^2}$$

In Equation 1, $\delta_T$ represents the Hansen solubility parameter ($MPa^{0.5}$), $\delta_d$ represents the solubility parameter ($MPa^{0.5}$) due to dispersion force, $\delta_p$ represents the solubility parameter ($MPa^{0.5}$) due to dipole-dipole interaction, and $\delta_h$ represents the solubility parameter ($MPa^{0.5}$) due to hydrogen bonding.

Within the above range, the interaction force between nitrile compound molecules may be appropriately

maintained. Accordingly, the volatility of the solvent may be decreased, electrolyte loss in the battery may be reduced, and the cycle life characteristics of the battery may be improved.

In Equation 1, $\delta_d$ may range from 15.4 $MPa^{0.5}$ to 18.2 $MPa^{0.5}$ or from 16 $MPa^{0.5}$ to 17 $MPa^{0.5}$. $\delta_p$ may range from 6.3 $MPa^{0.5}$ to 17 $MPa^{0.5}$, or from 10 $MPa^{0.5}$ to 15 $MPa^{0.5}$. $\delta_h$ may range from 6.0 $MPa^{0.5}$ to 7.9 $MPa^{0.5}$, or from 6.5 $MPa^{0.5}$ to 7.8 $MPa^{0.5}$.

According to exemplary embodiments, the liquid electrolyte includes a lithium salt. The lithium salt includes a first lithium salt including a borate compound and a second lithium salt different from the first lithium salt. By including different lithium salts, the stability of the interface between the anode and the solid electrolyte may be improved.

According to exemplary embodiments, the first lithium salt may include at least one selected from the group consisting of lithium tetrafluoroborate, lithium difluoro(oxalato)borate, and lithium bis(oxalato)borate.

According to exemplary embodiments, the second lithium salt may include an imide compound including fluorine. According to some embodiments, the second lithium salt may include a sulfonylimide compound including fluorine.

According to exemplary embodiments, the second lithium salt may include lithium bis(trifluoromethanesulfonyl) imide or lithium bis(fluorosulfonyl)imide.

For example, the first lithium salt may include lithium difluoro(oxalato)borate, and the second lithium salt may include lithium bis(trifluoromethanesulfonyl)imide or lithium bis(fluorosulfonyl)imide.

In exemplary embodiments, the first lithium salt may have a molar concentration of 0.01 M to 0.4 M. In some embodiments, the molar concentration of the first lithium salt may be 0.03 M to 0.3 M, or 0.05 M to 0.25 M.

In exemplary embodiments, the second lithium salt may have a molar concentration of 0.5 M to 2 M. In some embodiments, the molar concentration of the second lithium salt may be 0.7 M to 1.5 M, or 0.85 M to 0.95 M.

In exemplary embodiments, the molar concentration of the second lithium salt in the composition may be greater than the molar concentration of the first lithium salt.

In exemplary embodiments, the ratio of the molar concentration of the second lithium salt to the molar concentration of the first lithium salt in the composition may be greater than 1 and not more than 20. According to some embodiments, the ratio of the molar concentration of the second lithium salt to the molar concentration of the first lithium salt in the composition may be 1.2 to 19, 1.5 to 15, or 2 to 9.

Within the above range, a battery having improved rate characteristics and cycle life characteristics may be achieved.

According to exemplary embodiments, the liquid electrolyte may further include at least one additive selected from the group consisting of unsaturated cyclic carbonate compounds, fluorine-substituted cyclic carbonate compounds, sultone compounds, cyclic sulfate compounds, fluorine-substituted phosphate compounds, and oxalato-phosphate compounds.

The unsaturated cyclic carbonate compounds may include vinyl ethylene carbonate (VEC), vinylene carbonate (VC) or the like.

The fluorine-substituted cyclic carbonate compounds may include fluoroethylene carbonate (FEC).

The sultone compounds may include 1,3-propane sultone, 1,3-propene sultone, 1,4-butane sultone, or the like.

The cyclic sulfate compounds may include 1,2-ethylene sulfate, 1,2-propylene sulfate, or the like.

The fluorine-substituted phosphate compound may include lithium difluorophosphate ($LiPO_2F_2$), or the like.

The oxalato-phosphate compound may include lithium difluorobis(oxalato)phosphate, or the like.

These compounds may be used alone or in combination of two or more thereof.

The content of the additive may be about 0.01% by weight ("wt%") to 5 wt% based on the total weight of the liquid electrolyte.

According to exemplary embodiments, the composition may include an oxide-based inorganic electrolyte. For example, the oxide-based inorganic electrolyte may include a perovskite (LLTO) compound, a garnet (LLZO) compound, a NASICON (LAGP and LATP) compound, etc. These compounds may be used alone or in combination of two or more thereof.

The LLTO compound may be an oxide containing lithium, lanthanum, and titanium. The LLTO compound may further include Al, Ga, In, Sc, Zr, Ta, or the like.

The LLZO compound may be an oxide containing lithium, lanthanum, and zirconium. The LLZO compound may further include Al, Ga, In, Sc, Ba, Nb, or the like.

For example, the oxide-based inorganic electrolyte may include a garnet oxide-based inorganic electrolyte. Examples thereof may include $Li_5La_3Ta_2O_{12}$, $Li_7La_3Zr_2O_{12}$, $Li_5La_3Nb_2O_{12}$, $Li_6BaLa_2Ta_2O_{12}$, $Li_{6.4}La_3Zr_{1.4}Ta_{0.3}O_{12}$, or the like.

According to exemplary embodiments, the composition may include a monomer having a polymerizable functional group. The monomer may form a polymer through a reaction between polymerizable functional groups when energy is applied to the composition, and the polymer may function as a support and a matrix for the solid electrolyte.

According to exemplary embodiments, the polymerizable functional group may include a (meth)acrylate group.

According to exemplary embodiments, the monomer having a polymerizable functional group may include

bisphenol A ethoxylated di(meth)acrylate, ethylene glycol diacrylate, triethylene glycol diacrylate, trimethylolpropane ethoxylated triacrylate, (meth)acrylic acid, carboxyethyl acrylate, cyano(meth)acrylic acid, trimethylolpropane trimethacrylate, pentaerythritol tetraacrylate or the like.

According to exemplary embodiments, the content of the monomer may be 5 to 30 parts by weight, based on 100 parts by weight of the total of the liquid electrolyte and the monomer. According to some embodiments, the content of the monomer may be 10 to 25 parts by weight, or 15 to 25 parts by weight, based on 100 parts by weight of the total of the liquid electrolyte and the monomer.

Within the above range, the viscosity of the composition and the hardness of the solid electrolyte may avoid excessive increase, and the shape of the solid electrolyte may be maintained.

According to exemplary embodiments, the composition may further include a thermal initiator or a photoinitiator. The thermal initiator or the photoinitiator may initiate a polymerization reaction of the monomer, thereby forming a polymer.

For example, the thermal initiator may include a persulfate-based initiator, an azo-based initiator, hydrogen peroxide, ascorbic acid, a peroxide-based initiator or the like.

For example, the photoinitiator may include an acetophenone-based initiator, a benzophenone-based initiator, a thioxanthone-based initiator, a benzoin-based initiator, a triazine-based initiator or the like.

The content of the thermal initiator or the photoinitiator may be 0.1 to 3 parts by weight, based on 100 parts by weight of the total of the liquid electrolyte and the monomer.

The solid electrolyte according to the present disclosure includes a nitrile compound having an ether group, a first lithium salt including a borate compound, a second lithium salt different from the first lithium salt, and a polymer. The polymer may be a homopolymer or a copolymer formed by polymerizing or copolymerizing the above-described monomer.

The nitrile compound, the first lithium salt, and the second lithium salt may be the same as those described above.

The polymer may be formed by a polymerization reaction between polymerizable functional groups of a plurality of monomers, and the polymer may include repeating units derived from the monomers.

According to exemplary embodiments, the polymer may include repeating units derived from bisphenol A ethoxylated di(meth)acrylate, ethylene glycol diacrylate, triethylene glycol diacrylate, trimethylolpropane ethoxylated triacrylate, (meth)acrylic acid, carboxyethyl acrylate, cyano(meth)acrylic acid, trimethylolpropane trimethacrylate, pentaerythritol tetraacrylate or the like.

The solid electrolyte may be formed from the composition for forming a solid electrolyte. The solid electrolyte may be formed by thermal polymerization or photopolymerization of the composition for forming a solid electrolyte, and the solid electrolyte may include the polymer, which is formed by polymerizing the monomer.

For example, the composition for forming a solid electrolyte may be applied onto a porous film, and the monomer may be polymerized by heating (thermal polymerization) or light irradiation (photopolymerization). Alternatively, the composition for forming a solid electrolyte may be introduced into a mold having a predetermined shape, and the monomer may be polymerized by heating (thermal polymerization) or light irradiation (photopolymerization).

Therefore, the polymerizable functional groups may undergo a polymerization reaction to form a polymer. The polymer may have a three-dimensional network structure with pores, and the liquid electrolyte may be disposed within the pores.

For example, the porous film may include a plurality of interconnected pores, and the composition for forming a solid electrolyte may be impregnated into the pores. The monomer of the composition for forming a solid electrolyte may be polymerized through thermal polymerization to form a polymer. The polymer may form an interpenetrating polymer network (IPN) or a semi-interpenetrating polymer network (semi-IPN) with the pores of the porous film. The liquid electrolyte may be disposed in the pores of the formed polymer network.

When the composition for forming a solid electrolyte is thermally polymerized, the solid electrolyte may be formed by allowing the composition to stand at a temperature of about 50°C to 150°C for about 20 to 60 minutes.

According to exemplary embodiments, the solid electrolyte may have a thickness of about 10 μm to 200 μm. In some embodiments, the solid electrolyte may have a thickness of about 30 μm to 150 μm. The lithium secondary battery according to the present disclosure includes a cathode, an anode disposed opposite to the cathode, and the solid electrolyte interposed between the cathode and the anode.

**FIG.** 1 is a schematic cross-sectional view of the secondary battery according to an exemplary embodiment.

Referring to FIG. 1, the secondary battery includes a cathode 300, an anode 200 disposed opposite to the cathode 300, and an electrolyte layer 100 disposed between the cathode 300 and the anode 200, and including the solid electrolyte.

The cathode 300 may include a cathode current collector 310 and a cathode active material layer 320 disposed on at least one surface of the cathode current collector 310.

**The** cathode current collector 310 may include stainless steel, nickel, aluminum, titanium, or an alloy thereof. The cathode current collector 310 may also include aluminum or stainless steel whose surface is treated with carbon, nickel, titanium, or silver. The thickness of the cathode current collector may be, for example, 10 μm to 50 μm.

The cathode active material layer 320 may include a cathode active material. The cathode active material may

include a compound capable of reversibly intercalating and deintercalating lithium ions.

According to exemplary embodiments, the cathode active material may include a lithium-nickel metal oxide. The lithium-nickel metal oxide may further include at least one of cobalt (Co), manganese (Mn) and aluminum (Al).

In some embodiments, the cathode active material or the lithium-nickel metal oxide may include a layered structure or a crystal structure represented by Formula 2 below.

[Formula 2] $Li_xNi_aM_bO_{2+z}$

**In** Formula 2, x, a, b and z may satisfy $0.9 \leq x \leq 1.2$, $0.6 \leq a \leq 0.99$, $0.01 \leq b \leq 0.4$, and $-0.5 \leq z \leq 0.1$. As described above, M may include Co, Mn and/or Al.

The chemical structure represented by Formula 2 indicates a bonding relationship between elements included in the layered structure or the crystal structure of the cathode active material, and does not exclude other additional elements. For example, M includes Co and/or Mn, and Co and/or Mn may be provided as main active elements of the cathode active material together with Ni. Here, it should be understood that Formula 2 is provided to express the bonding relationship between the main active elements, and is a formula encompassing the introduction and substitution of additional elements.

In one embodiment, the cathode active material may further include auxiliary elements which are added to the main active elements, in order to enhance chemical stability thereof or the layered structure/crystal structure. The auxiliary element may be incorporated into the layered structure/crystal structure together with the main active elements to form bonds, and it should be understood that this case is also included within the chemical structure range represented by Formula 2.

The auxiliary element may include, for example, at least one selected from the group consisting of Na, Mg, Ca, Y, Ti, Hf, V, Nb, Ta, Cr, Mo, W, Fe, Cu, Ag, Zn, B, Al, Ga, C, Si, Sn, Sr, Ba, Ra, P and Zr. The auxiliary element may also act, for example, as an auxiliary active element which contributes to the capacity/output activity of the cathode active material together with Co or Mn, such as Al.

For example, the cathode active material or the lithium-nickel metal oxide may include a layered structure or a crystal structure represented by Formula 2-1 below.

[Formula 2-1] $Li_xNi_aM1_bM2_cO_{2+z}$

In Formula 2-1, M1 may include Co, Mn and/or Al. M2 may include the auxiliary elements described above. In Formula 2-1, x, a, b, c and z may satisfy $0.9 \leq x \leq 1.2$, $0.6 \leq a \leq 0.99$, $0.01 \leq b+c \leq 0.4$, and $-0.5 \leq z \leq 0.1$.

The cathode active material may further include a coating element or a doping element. For example, elements which are substantially the same as or similar to the above-described auxiliary elements may be used as the coating element or the doping element. For example, the above-described elements may be used alone or in combination of two or more thereof as the coating element or the doping element.

The coating element or the doping element may exist on the surface of lithium-nickel metal oxide particles, or may penetrate through the surface of the lithium-nickel metal oxide particles to be incorporated into the bonding structure represented by Formula 2 or Formula 2-1 above.

The cathode active material may include a nickel-cobalt-manganese (NCM)-based lithium oxide. In this case, an NCM-based lithium oxide having an increased content of nickel may be used.

Nickel (Ni) may be provided as a transition metal associated with the output and capacity of the lithium secondary battery. Therefore, as described above, by employing a high-nickel-content (high-Ni) composition in the cathode active material, a high-capacity cathode and a high-capacity lithium secondary battery may be provided.

In this regard, as the content of Ni increases, long-term storage stability and cycle life stability of the cathode or the secondary battery may be relatively reduced, and side reactions with the electrolyte may also increase. However, according to exemplary embodiments, by including Co, the cycle life stability and capacity retention characteristics may be improved through Mn while maintaining electrical conductivity.

**The** content of Ni (e.g., the molar fraction of nickel based on the total molar amount of nickel, cobalt and manganese) in the NCM-based lithium oxide may be 0.6 or more, 0.7 or more, or 0.8 or more. In some embodiments, the content of Ni may be 0.8 to 0.95, 0.82 to 0.95, 0.83 to 0.95, 0.84 to 0.95, 0.85 to 0.95, or 0.88 to 0.95.

In some embodiments, the cathode active material may include a lithium cobalt oxide-based active material, a lithium manganese oxide-based active material, a lithium nickel oxide-based active material, or a lithium iron phosphate (LFP)-based active material (e.g., $LiFePO_4$).

**In** some embodiments, the cathode active material may include, for example, a manganese (Mn)-rich active material, a lithium (Li)-rich layered oxide (LLO)/over-lithiated oxide (OLO)-based active material, or a cobalt (Co)-less active material, which have a chemical structure or a crystal structure represented by Formula 3 below.

[Formula 3] $p[Li_2MnO_3]\cdot(1-p)[Li_qJO_2]$

In Formula 3, p and q may satisfy $0<p<1$, and $0.9\leq q\leq 1.2$, and J may include at least one element selected from Mn, Ni, Co, Fe, Cr, V, Cu, Zn, Ti, Al, Mg and B.

For example, a cathode slurry may be prepared by mixing a solvent and the cathode active material. The cathode slurry may be coated on the cathode current collector 310, followed by drying and roll-pressing to prepare the cathode active material layer 320. The coating process may be performed using methods such as gravure coating, slot die coating, simultaneous multilayer die coating, imprinting, doctor blade coating, dip coating, bar coating or casting, etc., but is not limited thereto. The cathode active material layer may further include a binder and optionally may further include a conductive material, a thickener or the like.

Non-limiting examples of the solvent used in the preparation of the cathode slurry may include N-methyl-2-pyrrolidone (NMP), dimethylformamide, dimethylacetamide, N,N-dimethylaminopropylamine, ethylene oxide, tetrahydrofuran or the like.

The binder may include polyvinylidene fluoride (PVDF), poly(vinylidene fluoride-co-hexafluoropropylene), polyacrylonitrile, polymethyl methacrylate, acrylonitrile butadiene rubber (NBR), poly(butadiene) rubber (BR), styrene-butadiene rubber (SBR) and the like. In one embodiment, a PVDF-based binder may be used as the cathode binder.

The conductive material may be added to the cathode active material layer to enhance the conductivity thereof and/or the mobility of lithium ions or electrons. For example, the conductive material may include carbon-based conductive materials such as graphite, carbon black, acetylene black, Ketjen black, graphene, carbon nanotubes, vapor-grown carbon fibers (VGCFs), and carbon fibers, and/or metal-based conductive materials, including perovskite materials, such as tin, tin oxide, titanium oxide, $LaSrCoO_3$, and $LaSrMnO_3$, but is not limited thereto.

The cathode slurry may further include a thickener and/or a dispersant, as needed. In one embodiment, the cathode slurry may include a thickener such as carboxymethyl cellulose (CMC).

The anode 200 may include an anode current collector 210 and an anode active material layer 220 disposed on at least one surface of the anode current collector 210.

The anode current collector 210 may include, for example, a copper foil, a nickel foil, a stainless steel foil, a titanium foil, a nickel foam, a copper foam, a polymer substrate coated with a conductive metal and the like. The anode current collector 210 may have a thickness of, for example, 10 $\mu$m to 50 $\mu$m, but is not limited thereto.

The anode current collector 210 is not an essential component, and the anode 200 may include only the anode active material layer 220 without the anode current collector 210.

The anode active material layer 220 may include an anode active material. As the anode active material, a material capable of adsorbing and desorbing lithium ions may be used. For example, as the anode active material, carbon-based materials such as crystalline carbon, amorphous carbon, carbon composites, or carbon fibers, etc.; lithium metal; a lithium alloy; a silicon (Si)-containing material or a tin (Sn)-containing material may be used.

Examples of the amorphous carbon may include hard carbon, soft carbon, coke, mesocarbon microbead (MCMB), mesophase pitch-based carbon fiber (MPCF) or the like.

Examples of the crystalline carbon may include graphite-based carbon such as natural graphite, artificial graphite, graphitized coke, graphitized MCMB, graphitized MPCF or the like.

The lithium metal may include pure lithium metal or lithium metal having a protective layer formed thereon for suppressing dendrite growth, etc. In one embodiment, a lithium metal-containing layer deposited or coated on the anode current collector may be used as the anode active material layer. In one embodiment, a lithium thin film layer may be used as the anode active material layer.

Elements included in the lithium alloy may include aluminum, zinc, bismuth, cadmium, antimony, silicon, lead, tin, gallium or indium, etc.

The silicon-containing material may provide further increased capacity characteristics. The silicon-containing material may include Si, $SiO_x$ ($0<x<2$), a metal-doped $SiO_x$ ($0<x<2$), a silicon-carbon composite, etc. The metal may include lithium and/or magnesium, and the metal-doped $SiO_x$ ($0<x<2$) may include a metal silicate.

For example, an anode slurry may be prepared by mixing the anode active material in a solvent. The anode slurry may be coated/deposited to the anode current collector, and then dried and roll-pressed to prepare the anode active material layer 220. The coating process may be performed using substantially the same method as the method of preparing the cathode active material layer 320. The anode active material layer 220 may further include a binder, and optionally may further include an electrolyte, a conductive material, a thickener, etc.

In some embodiments, the anode 200 may include the anode active material layer in the form of a lithium metal formed through a deposition/coating process.

The solvent for the anode active material layer may include, for example, water, purified water, deionized water, distilled water, ethanol, isopropanol, methanol, acetone, n-propanol, t-butanol, etc.

The above-described materials that can be used when manufacturing the cathode as the binder, conductive material and thickener may also be used for the anode.

**In** some embodiments, a styrene-butadiene rubber-based binder, carboxymethyl cellulose, polyacrylic acid-based binder, poly(3,4-ethylenedioxythiophene (PEDOT)-based binder, and the like may be used as an anode binder.

In some embodiments, the electrolyte layer 100 may be interposed between the cathode 300 and the anode 200 within the electrode assembly. For example, an electrode cell may be defined by the cathode 300, the anode 200 and the electrolyte layer 100, and a plurality of the electrode cells may be stacked to form an electrode assembly. For example, the electrode assembly may be formed by winding, stacking, folding or the like.

In exemplary embodiments, the electrode cell may be formed by interposing a solid electrolyte derived from the composition for forming a solid electrolyte between the cathode 300 and the anode 200.

For example, electrode tabs (cathode tabs and anode tabs) may protrude from the cathode current collector and the anode current collector, respectively, and may extend to one side of a case. The electrode tabs may be fused together with the one side of the case and connected to electrode leads (a cathode lead and an anode lead) that extend or are exposed to the outside of the case.

For example, a pouch-type case, a prismatic case, a cylindrical case, or a coin-type case, etc. may be used as the case.

In some embodiments, a preliminary battery may be manufactured by interposing a porous film between the cathode 300 and the anode 200 and embedding the assembly in the case. The composition for forming a solid electrolyte may be injected into the preliminary battery, and a polymerization reaction may be performed to form the electrolyte layer 100 in situ. For example, the composition for forming a solid electrolyte may be injected into the preliminary battery and heated to initiate a thermal polymerization reaction of the monomer.

In some embodiments, a preliminary cell may be manufactured by laminating a porous film on the cathode 300 or the anode 200, applying the composition for forming a solid electrolyte to the film, and then laminating the anode 200 or the cathode 300. After the preliminary cell is embedded in the case, it may be heated to allow the thermal polymerization reaction of the monomer to proceed, and the electrolyte layer 100 may be formed.

According to exemplary embodiments, the battery may be an all-solid-state battery. As used herein, the term "all-solid-state battery" may include a quasi-solid-state battery, a semi-solid-state battery or the like.

## Example 1

(1) Preparation of a composition for forming a solid electrolyte

A composition for forming a solid electrolyte was prepared by mixing 80 parts by weight of a liquid electrolyte including 0.8 M lithium bis(fluorosulfonyl)imide (LiFSI) and 0.2 M lithium difluoro(oxalato)borate (LiDFOB) dissolved in methoxypropionitrile and 5 parts by weight of fluoroethylene carbonate, 20 parts by weight of bisphenol A ethoxylated diacrylate (molecular weight 688), and 2 parts by weight of t-butyl peroxypivalate (t-BPP, Seki Arkema Co., Korea) as a thermal initiator.

(2) Manufacture of lithium secondary battery

$LiNi_{0.8}Co_{0.1}Mn_{0.1}O_2$ as a cathode active material, polyvinylidene fluoride (PVDF, Kynar Flex® 2851, Arkema) as a binder, and Ketjen Black as a conductive material were put into N-methylpyrrolidone as a solvent in a mixer (Thinky mixer) at a weight ratio of 96.5:1.5:2.0 and mixed by rotation and revolution for 30 minutes to prepare a cathode slurry. The cathode slurry was uniformly applied to an aluminum foil, vacuum-dried at about 120 °C, and roll-pressed to fabricate a cathode (loading amount: about 12.5 mg/cm$^2$, mixture density: about 2.5 g/cm$^3$).

In a glove box, a polyacrylonitrile-polyvinylidene fluoride (PAN-PVDF) nonwoven fabric support (porosity: about 72.5%) was laminated onto a lithium metal foil having a thickness of 300 μm (Honjo Metal). The composition for forming a solid electrolyte was applied to the nonwoven fabric support, and the cathode was then stacked to assemble the cell. The cell was aged for 7 hours or more and then thermally cured in an oven at about 90 °C for about 45 minutes to manufacture a battery.

## Example 2

A composition for forming a solid electrolyte and battery were manufactured in the same manner as in Example 1, except that the concentration of LiFSI in the liquid electrolyte was 0.95 M and the concentration of LiDFOB was 0.05 M.

## Example 3

A composition for forming a solid electrolyte and battery were manufactured in the same manner as in Example 1, except that the LiFSI concentration in the liquid electrolyte was 0.9 M and the concentration of LiDFOB was 0.1 M.

## Example 4

A composition for forming a solid electrolyte and battery were manufactured in the same manner as in Example 1, except that the LiFSI concentration in the liquid electrolyte was 0.85 M and the concentration of LiDFOB was 0.15 M.

## Example 5

A composition for forming a solid electrolyte and battery were manufactured in the same manner as in Example 1, except that the LiFSI concentration in the liquid electrolyte was 0.70 M and the concentration of LiDFOB was 0.30 M.

## Example 6

A composition for forming a solid electrolyte and battery were manufactured in the same manner as in Example 1, except that the LiFSI concentration in the liquid electrolyte was 0.60 M and the concentration of LiDFOB was 0.40 M.

## Example 7

A composition for forming a solid electrolyte and battery were manufactured in the same manner as in Example 3, except that lithium bis(trifluoromethanesulfonyl)imide (LiTFSI) was used instead of LiFSI.

## Comparative Example 1

A composition for forming a solid electrolyte and battery were manufactured in the same manner as in Example 1, except that LiDFOB was not used and LiFSI was used at a concentration of 1 M.

## Comparative Example 2

A composition for forming a solid electrolyte and battery were manufactured in the same manner as in Example 1, except that LiTFSI was used at a concentration of 1 M and LiDFOB was not used.

## Comparative Example 3

A composition for forming a solid electrolyte and battery were manufactured in the same manner as in Example 1, except that LiFSI was not used and LiDFOB was used at a concentration of 1 M.

## Experimental Example 1: Evaluation of cycle life characteristics of battery

**In** the lithium secondary batteries of Examples 1 to 6 and Comparative Examples 1 to 3, the batteries were charged at a constant current of 0.33C until the voltage reached 4.2 V, then charged at a constant voltage of 4.2 V until the current reached one-third of the constant current, and discharged at 0.5C until 3.0 V. This process was defined as one cycle and was repeated for 100 cycles, and the discharge capacity and coulombic efficiency were measured for each cycle.
FIG. 2 is a graph showing the change in discharge capacity of the lithium secondary batteries of Examples 2 to 4 and Comparative Examples 1 to 3 with respect to the cycle number.
FIG. 3 is a graph showing the change in discharge capacity of the lithium secondary batteries of Examples 1, Examples 5 to 6, and Comparative Examples 1 to 3 with respect to the cycle number.
FIGS. 4 to 7 are graphs showing the charge-discharge characteristic curves of the lithium secondary batteries of Examples 5 and 6 and Comparative Examples 1 and 2, respectively, with respect to the cycle number.
Referring to FIGS. 2 to 7, the batteries of Examples 1 and 3 to 6 exhibited slower declines in discharge capacity and improved cycle life characteristics compared to Comparative Examples 1 and 2, respectively. In particular, the battery of Example 5 exhibited a capacity retention of about 85% after 100 cycles.

## Experimental Example 2: Evaluation of rate characteristics of battery

The lithium secondary batteries of Examples 1 to 7 and Comparative Examples 1 to 3 were subjected to four charge-discharge cycles each at 25 °C under constant current conditions in a voltage range of 4.2 V to 3.0 V, at rates of 0.1C, 0.2C, 0.5C and 1C. The discharge capacity was measured, and the rate characteristics were evaluated based on the discharge capacity retention at 0.1C.
FIG. 8 is a graph showing the change in discharge capacity of the lithium secondary batteries of Examples 1 to 6

and Comparative Examples 1 and 3, with respect to the cycle number and rate.

FIG. 9 is a graph showing the change in discharge capacity of the lithium secondary batteries of Example 7 and Comparative Examples 2 and 3, with respect to the cycle number and rate.

According to FIGS. 8 and 9, the discharge capacities of the batteries of the examples and comparative examples at each rate are shown in Table 1 below.

[TABLE 1]

| | Discharge capacity with respect to rate (mAh $g^{-1}$) | | | |
|---|---|---|---|---|
| | 0.1C | 0.2C | 0.5C | 1C |
| Example 1 | 179.18 | 169.19 | 156.75 | 141.30 |
| Example 2 | 176.22 | 165.89 | 152.41 | 135.95 |
| Example 3 | 175.65 | 165.35 | 152.55 | 139.90 |
| Example 4 | 177.12 | 166.29 | 153.15 | 136.84 |
| Example 5 | 169.14 | 159.11 | 143.37 | 123.14 |
| Example 6 | 170.34 | 161.06 | 145.94 | 124.20 |
| Example 7 | 186.39 | 177.37 | 164.30 | 147.25 |
| Comparative Example 1 | 173.91 | 164.93 | 151.52 | 133.90 |
| Comparative Example 2 | 176.17 | 142.91 | 56.05 | 7.46 |
| Comparative Example 3 | 172.08 | 161.45 | 146.80 | 133.01 |

Referring to FIGS. 8 and 9 and Table 1, the batteries of Examples 1 to 7 maintained a discharge capacity of about 120 mAh/g or more under 1C charge/discharge conditions. In particular, the batteries of Examples 1 to 4 and 7 exhibited a discharge capacity of 135 mAh/g or more (capacity retention of 77% or more) at 1C, which was higher than that of the comparative examples.

**Experimental Example 3: Evaluation of ionic conductivity of solid electrolyte**

Stainless steel was used as the electrode, and the composition for forming solid electrolytes of the examples and comparative examples were placed between two SUS plates to manufacture a coin cell-type conductivity measurement cell. The internal resistance of the cell was measured using an electrochemical impedance analyzer (IM6, Zahner Elektrik). The impedance spectrum was measured at an open circuit potential with an amplitude of 20 mV in the frequency range of 1 Hz to 1 MHz, and the ionic conductivity was measured at 25 °C.

The measurement results are shown in Table 2 below.

[TABLE 2]

Referring to Table 2, the solid electrolytes of the examples maintained ionic conductivities of $2.50 \times 10^{-3}$ S/cm or more at room temperature (25 °C), and in particular, Example 7 exhibited an excellent ionic conductivity of $3.33 \times 10^{-3}$ S/cm.

**Experimental Example 4: Evaluation of rate characteristics of lithium-ion battery**

Manufacture of lithium-ion battery

**A** lithium-ion battery was manufactured in the same manner as in Example 7, except that graphite was used as the anode instead of lithium metal.

The lithium-ion battery was subjected to four charge-discharge cycles at 0.1C, 0.2C, 0.5C, 1C, 2C, back to 0.1C at 25 °C, and the discharge capacity was measured. The rate characteristics were evaluated based on the discharge capacity retention at 0.1C.

FIG. 10 is a graph showing the change in discharge capacity of a lithium-ion battery including the solid electrolyte of Example 7, with respect to the cycle number.

Referring to FIG. 10, the lithium-ion battery including the solid electrolyte of Example 7 exhibited charge-discharge characteristics up to 0.5C at room temperature.

The contents described above are merely examples of applying the principles of the present disclosure, and other configurations may be further included without departing from the scope of the present disclosure.

| | Ionic conductivity (S/cm) (25 °C) |
|---|---|
| Example 1 | $2.70 \times 10^{-3}$ |
| Example 2 | - |
| Example 3 | $2.85 \times 10^{-3}$ |
| Example 4 | - |
| Example 5 | $2.56 \times 10^{-3}$ |
| Example 6 | - |
| Example 7 | $3.33 \times 10^{-3}$ |
| Comparative Example 1 | - |
| Comparative Example 2 | $2.40$ x $10^{-3}$ |
| Comparative Example 3 | $2.23 \times 10^{-3}$ |

The invention is also defined by the following aspects:

Aspect 1. A composition for forming a solid electrolyte comprising:
a liquid electrolyte comprising a solvent including a nitrile compound having an ether group, a first lithium salt including a borate compound, and a second lithium salt different from the first lithium salt; and a monomer having a polymerizable functional group.

Aspect 2. The composition for forming a solid electrolyte according to aspect 1, wherein the nitrile compound includes one or two ether groups and one or two nitrile groups.

Aspect 3. The composition for forming a solid electrolyte according to aspect 1 or 2, wherein the nitrile compound includes an alkoxy group having 1 to 5 carbon atoms.

Aspect 4. The composition for forming a solid electrolyte according to any one of aspect 1 to 3, wherein the nitrile compound includes at least one selected from the group consisting of methoxypropionitrile, methoxybutyronitrile, and ethoxypropionitrile.

Aspect 5. The composition for forming a solid electrolyte according to any one of aspect 1 to 4, wherein the second lithium salt includes an imide compound including fluorine.

Aspect 6. The composition for forming a solid electrolyte according to any one of aspect 1 to 5, wherein the first lithium salt includes at least one selected from the group consisting of lithium tetrafluoroborate, lithium difluoro(oxalato) borate and lithium bis(oxalato)borate, and the second lithium salt includes lithium bis(trifluoromethanesulfonyl)imide or lithium bis(fluorosulfonyl)imide.

Aspect 7. The composition for forming a solid electrolyte according to any one of aspect 1 to 6, wherein the first lithium salt has a molar concentration of 0.01 M to 0.4 M, and the second lithium salt has a molar concentration of 0.5 M to 2 M.

Aspect 8. The composition for forming a solid electrolyte according to any one of aspect 1 to 7, wherein the ratio of the molar concentration of the second lithium salt to the molar concentration of the first lithium salt in the composition is greater than 1 and not more than 20.

Aspect 9. The composition for forming a solid electrolyte according to any one of aspect 1 to 8, wherein the monomer having a polymerizable functional group includes at least one selected from the group consisting of bisphenol A ethoxylated di(meth)acrylate, ethylene glycol diacrylate, triethylene glycol diacrylate, trimethylolpropane ethoxylated triacrylate, (meth)acrylic acid, carboxyethyl acrylate, cyano(meth)acrylate, trimethylolpropane trimethacrylate, and pentaerythritol tetraacrylate.

Aspect 10. The composition for forming a solid electrolyte according to any one of aspect 1 to 9, wherein the content of the monomer is 5 to 30 parts by weight, based on 100 parts by weight of the total of the weights of the liquid electrolyte and the monomer.

Aspect 11. The composition for forming a solid electrolyte according to any one of aspect 1 to 10, wherein the liquid electrolyte further includes at least one additive selected from the group consisting of an unsaturated cyclic carbonate compound, a fluorine-substituted cyclic carbonate compound, a sultone compound, a cyclic sulfate compound, a fluorine-substituted phosphate compound, and an oxalato-phosphate compound.

Aspect 12. A solid electrolyte comprising: a nitrile compound having an ether group; a first lithium salt including a

borate compound; a second lithium salt different from the first lithium salt; and a polymer.

Aspect 13. The solid electrolyte according to aspect 12, wherein the nitrile compound includes one or two ether groups and one or two nitrile groups.

Aspect 14. The solid electrolyte according to aspect 12 or 13, wherein the second lithium salt includes an imide compound including fluorine.

Aspect 15. A lithium secondary battery comprising: a cathode; an anode disposed opposite to the cathode; and the solid electrolyte according to any one of aspect 12 to 14 interposed between the cathode and the anode.

## Claims

1. A composition for forming a solid electrolyte comprising:

   a liquid electrolyte comprising a solvent including a nitrile compound having an ether group, a first lithium salt including a borate compound, and a second lithium salt different from the first lithium salt; and
   a monomer having a polymerizable functional group.

2. The composition for forming a solid electrolyte according to claim 1, wherein the nitrile compound includes one or two ether groups and one or two nitrile groups.

3. The composition for forming a solid electrolyte according to claim 1 or 2, wherein the nitrile compound includes an alkoxy group having 1 to 5 carbon atoms.

4. The composition for forming a solid electrolyte according to any one of claims 1 to 3, wherein the nitrile compound includes at least one selected from the group consisting of methoxypropionitrile, methoxybutyronitrile, and ethoxypropionitrile.

5. The composition for forming a solid electrolyte according to any one of claims 1 to 4, wherein the second lithium salt includes an imide compound including fluorine.

6. The composition for forming a solid electrolyte according to any one of claims 1 to 5, wherein the first lithium salt includes at least one selected from the group consisting of lithium tetrafluoroborate, lithium difluoro(oxalato)borate and lithium bis(oxalato)borate, and
   the second lithium salt includes lithium bis(trifluoromethanesulfonyl)imide or lithium bis(fluorosulfonyl)imide.

7. The composition for forming a solid electrolyte according to any one of claims 1 to 6, wherein the first lithium salt has a molar concentration of 0.01 M to 0.4 M, and the second lithium salt has a molar concentration of 0.5 M to 2 M.

8. The composition for forming a solid electrolyte according to any one of claims 1 to 7, wherein the ratio of the molar concentration of the second lithium salt to the molar concentration of the first lithium salt in the composition is greater than 1 and not more than 20.

9. The composition for forming a solid electrolyte according to any one of claims 1 to 8, wherein the monomer having a polymerizable functional group includes at least one selected from the group consisting of bisphenol A ethoxylated di(meth)acrylate, ethylene glycol diacrylate, triethylene glycol diacrylate, trimethylolpropane ethoxylated triacrylate, (meth)acrylic acid, carboxyethyl acrylate, cyano(meth)acrylate, trimethylolpropane trimethacrylate, and pentaerythritol tetraacrylate.

10. The composition for forming a solid electrolyte according to any one of claims 1 to 9, wherein the content of the monomer is 5 to 30 parts by weight, based on 100 parts by weight of the total of the weights of the liquid electrolyte and the monomer.

11. The composition for forming a solid electrolyte according to any one of claims 1 to 10, wherein the liquid electrolyte further includes at least one additive selected from the group consisting of an unsaturated cyclic carbonate compound, a fluorine-substituted cyclic carbonate compound, a sultone compound, a cyclic sulfate compound, a fluorine-substituted phosphate compound, and an oxalato-phosphate compound.

12. A solid electrolyte comprising:

a nitrile compound having an ether group;
a first lithium salt including a borate compound;
a second lithium salt different from the first lithium salt; and
a polymer.

**13.** The solid electrolyte according to claim 12, wherein the nitrile compound includes one or two ether groups and one or two nitrile groups.

**14.** The solid electrolyte according to claim 12 or 13, wherein the second lithium salt includes an imide compound including fluorine.

**15.** A lithium secondary battery comprising:

a cathode;
an anode disposed opposite to the cathode; and
the solid electrolyte according to any one of claims 12 to 14 interposed between the cathode and the anode.

[FIG. 1]

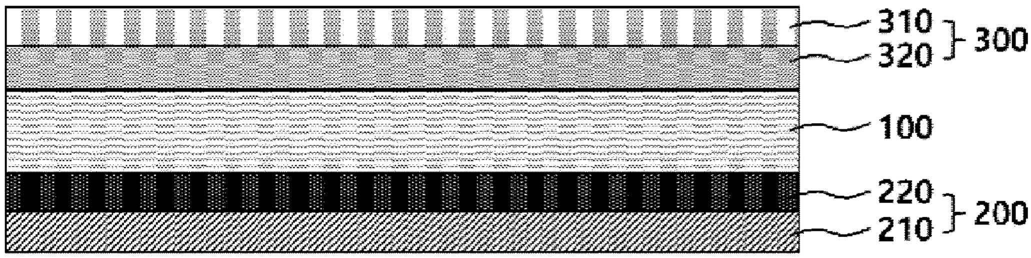
310
320
300
100
220
210
200

[FIG. 2]

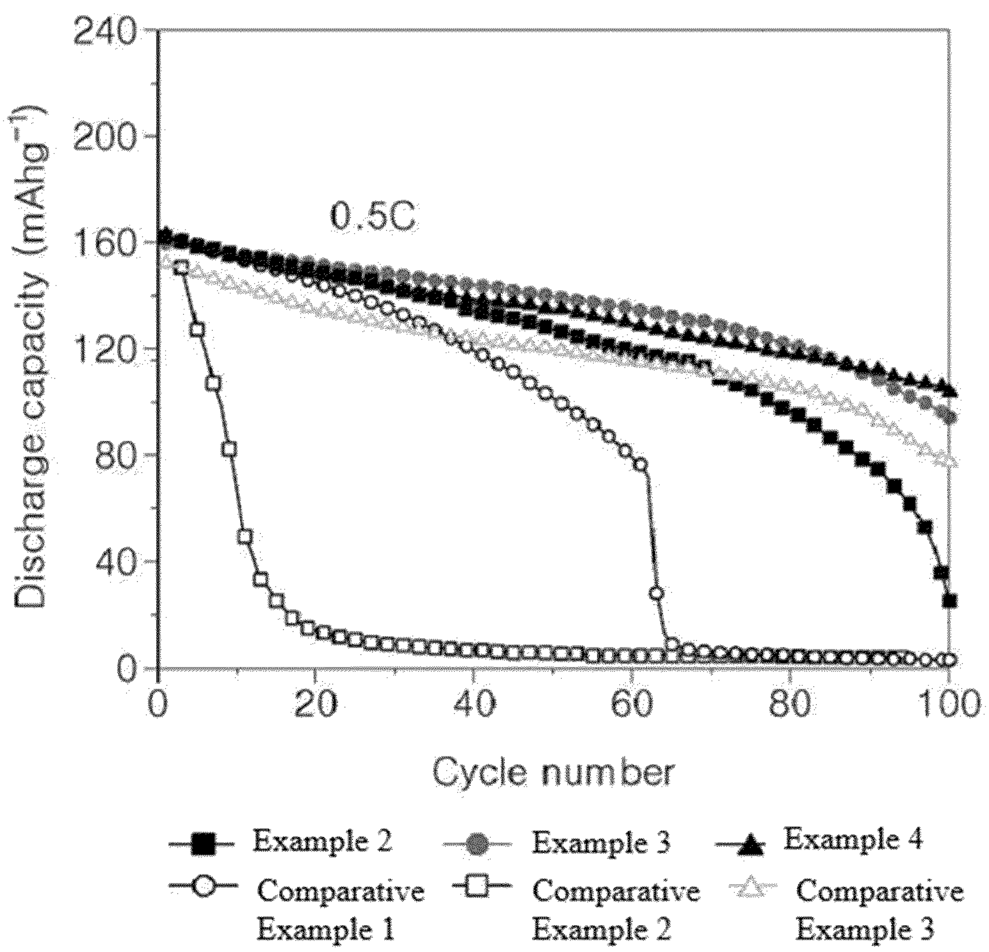
Discharge capacity (mAhg-1)
Cycle number
0.5C
240
200
160
120
80
40
0
20
40
60
80
100
Example 2
Example 3
Example 4
Comparative Example 1
Comparative Example 2
Comparative Example 3

[FIG. 3]

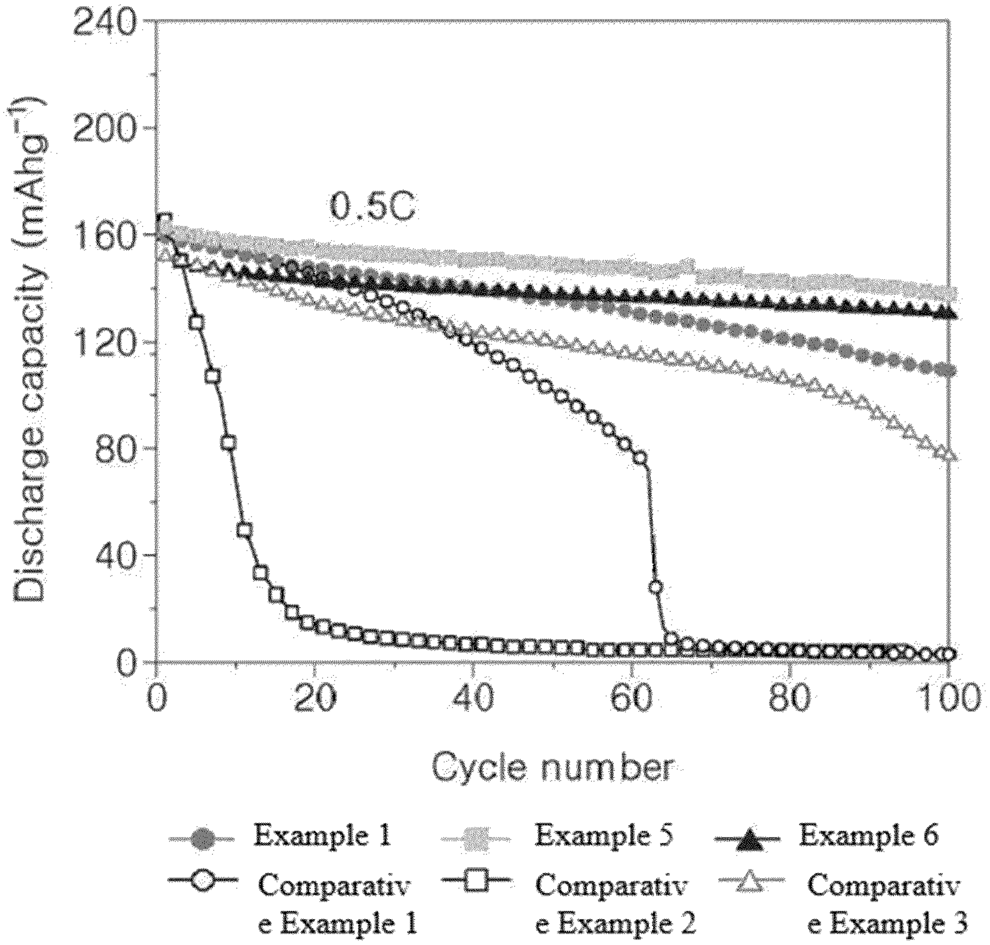
0.5C
Discharge capacity (mAhg$^{-1}$)
240
200
160
120
80
40
0
0
20
40
60
80
100
Cycle number
Example 1
Example 5
Example 6
Comparative Example 1
Comparative Example 2
Comparative Example 3

[FIG. 4]

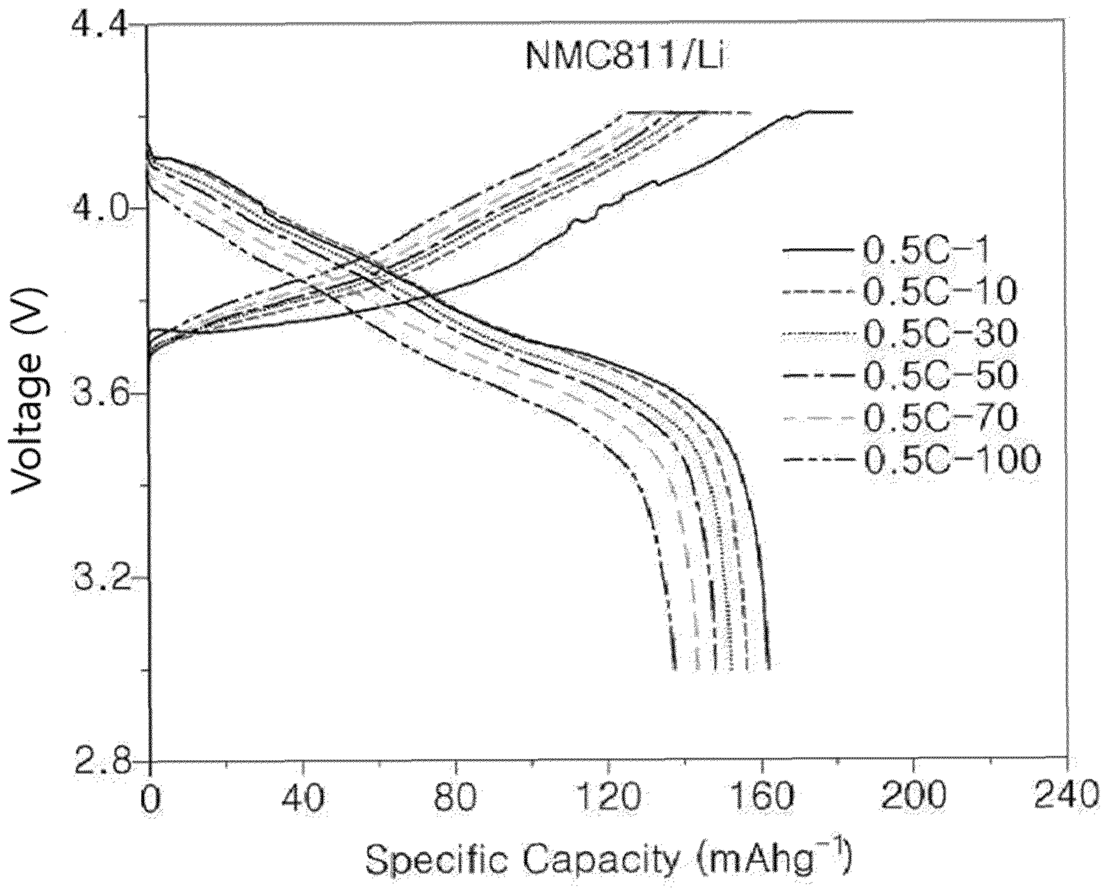
NMC811/Li
Voltage (V)
Specific Capacity (mAhg$^{-1}$)
4.4
4.0
3.6
3.2
2.8
0
40
80
120
160
200
240
0.5C-1
0.5C-10
0.5C-30
0.5C-50
0.5C-70
0.5C-100

[FIG. 5]

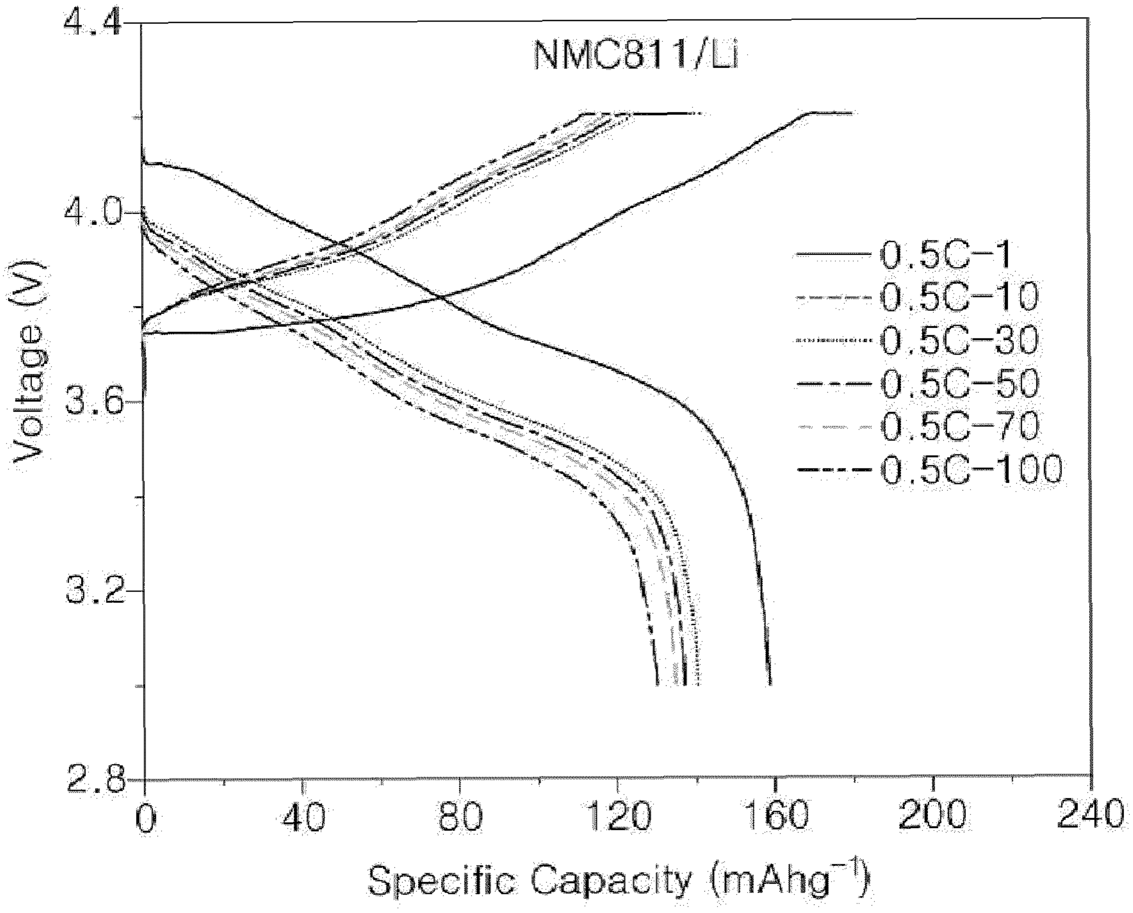
NMC811/Li
Voltage (V)
Specific Capacity (mAhg$^{-1}$)
0.5C-1
0.5C-10
0.5C-30
0.5C-50
0.5C-70
0.5C-100
4.4
4.0
3.6
3.2
2.8
0
40
80
120
160
200
240

[FIG. 6]

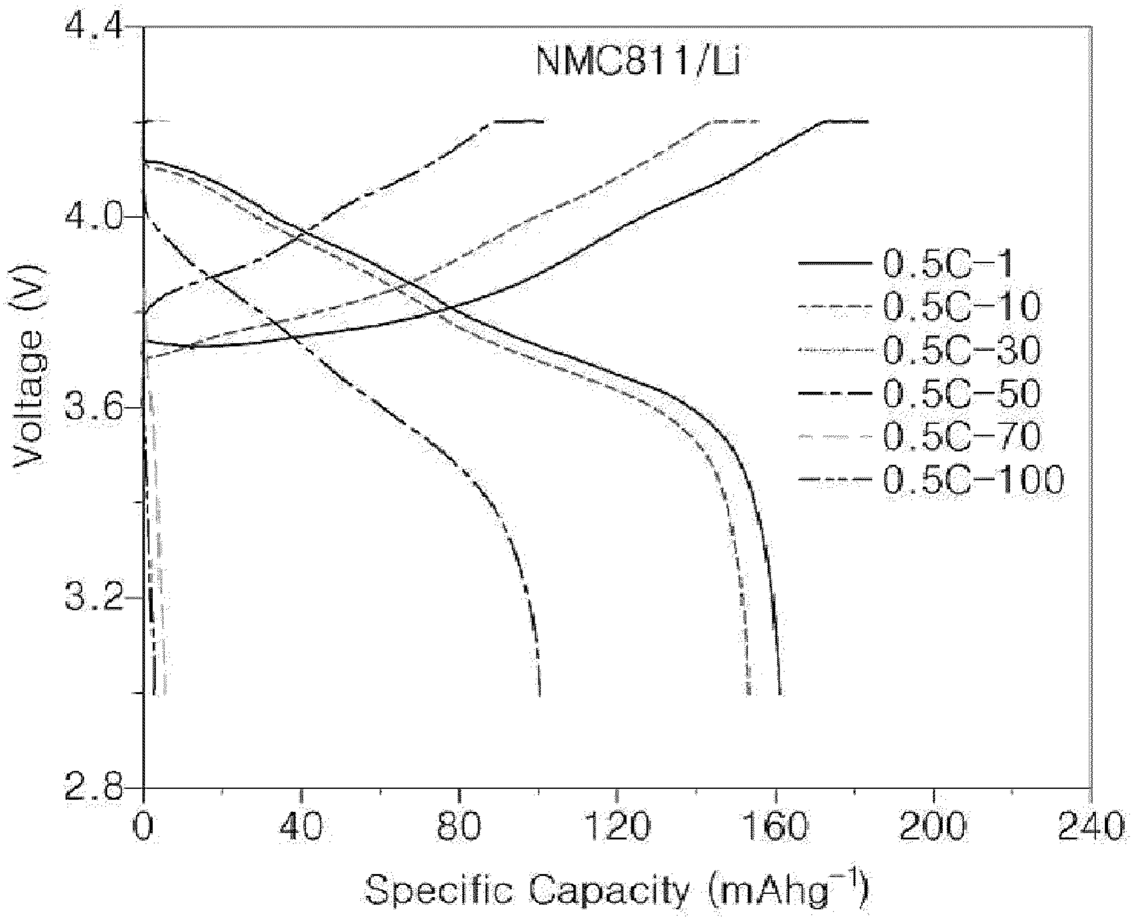
NMC811/Li
Voltage (V)
Specific Capacity (mAhg$^{-1}$)
0.5C-1
0.5C-10
0.5C-30
0.5C-50
0.5C-70
0.5C-100
4.4
4.0
3.6
3.2
2.8
0
40
80
120
160
200
240

[FIG. 7]

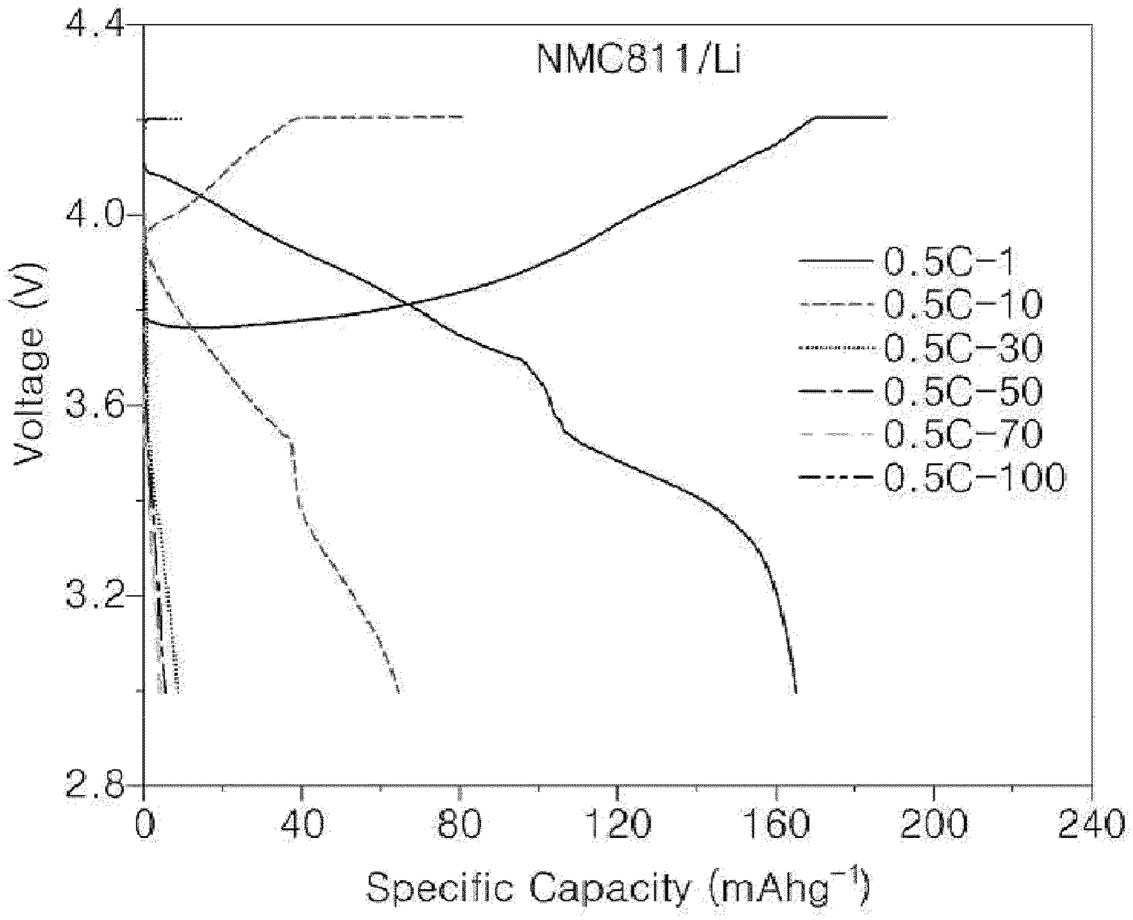
NMC811/Li
Voltage (V)
4.4
4.0
3.6
3.2
2.8
0
40
80
120
160
200
240
Specific Capacity ($mAhg^{-1}$)
0.5C-1
0.5C-10
0.5C-30
0.5C-50
0.5C-70
0.5C-100

[FIG. 8]

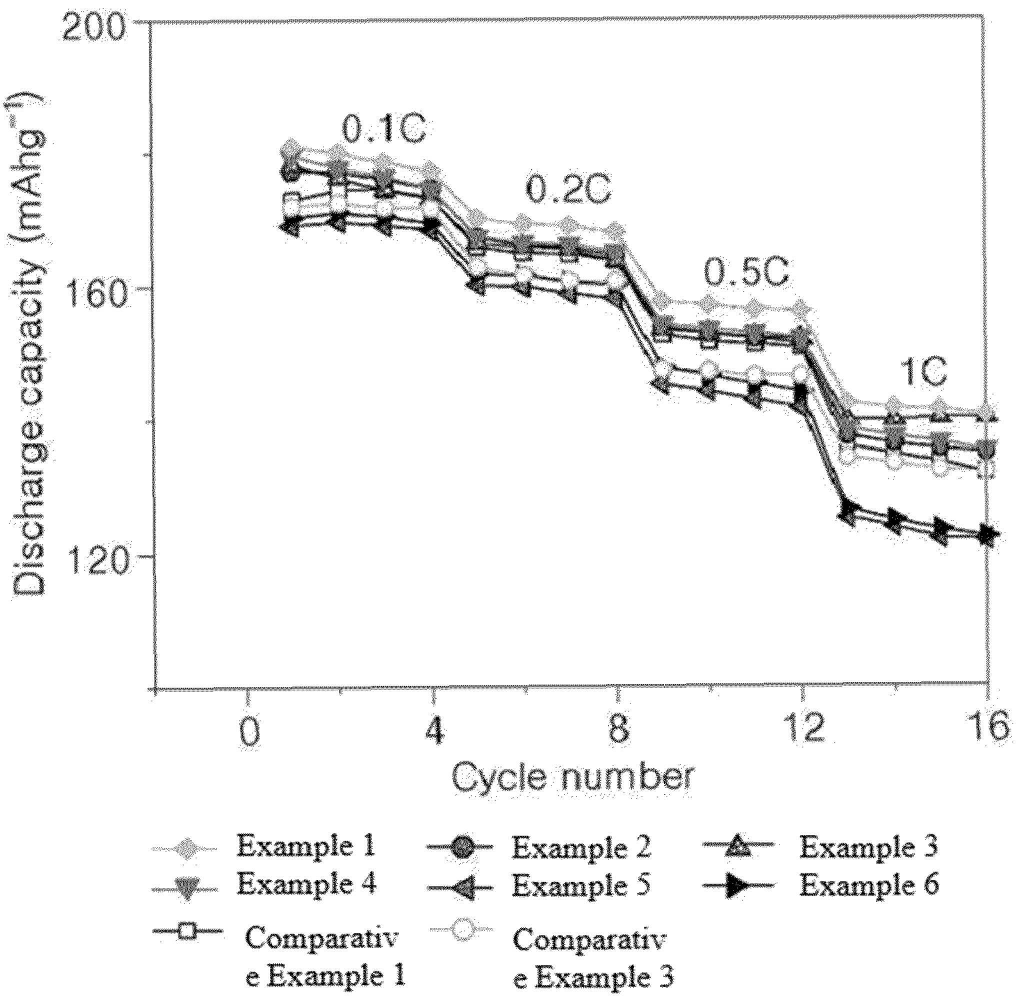
Discharge capacity (mAhg$^{-1}$)
Cycle number
200
160
120
0
4
8
12
16
0.1C
0.2C
0.5C
1C
Example 1
Example 2
Example 3
Example 4
Example 5
Example 6
Comparative Example 1
Comparative Example 3

[FIG. 9]

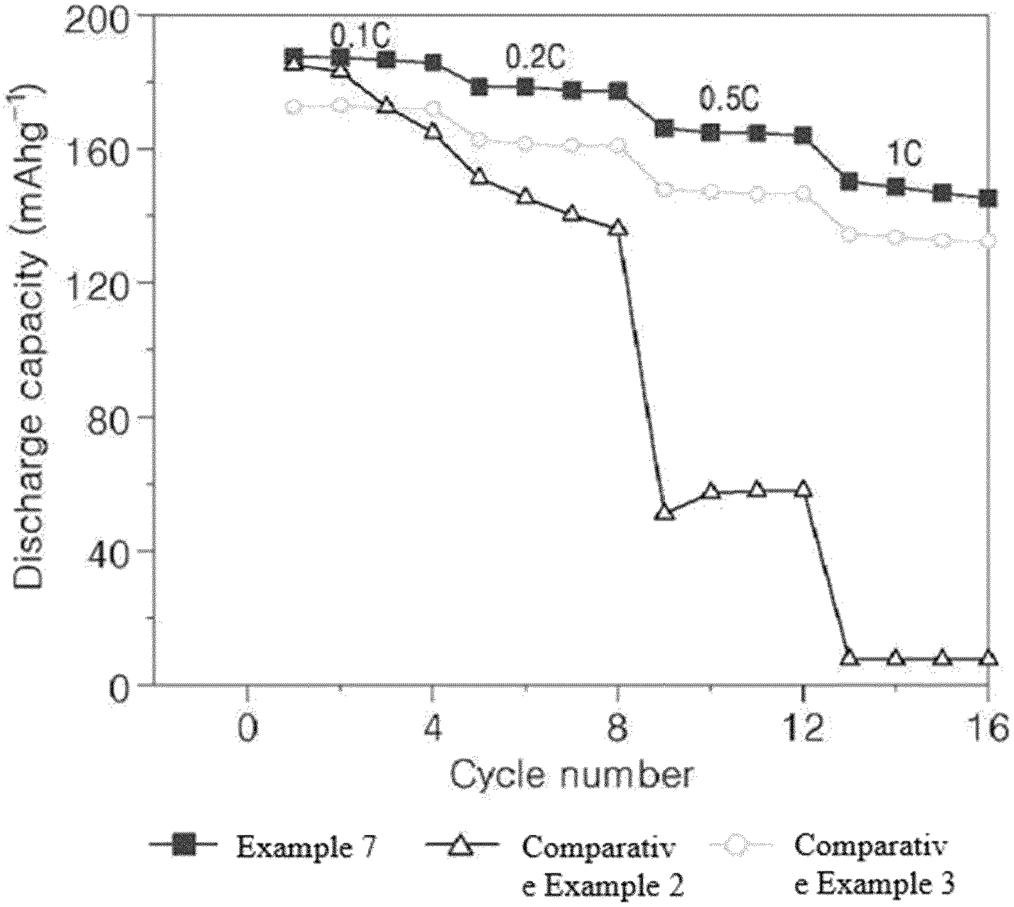
200
160
120
80
40
0
Discharge capacity (mAhg$^{-1}$)
0
4
8
12
16
Cycle number
0.1C
0.2C
0.5C
1C
Example 7
Comparativ e Example 2
Comparativ e Example 3

[FIG. 10]

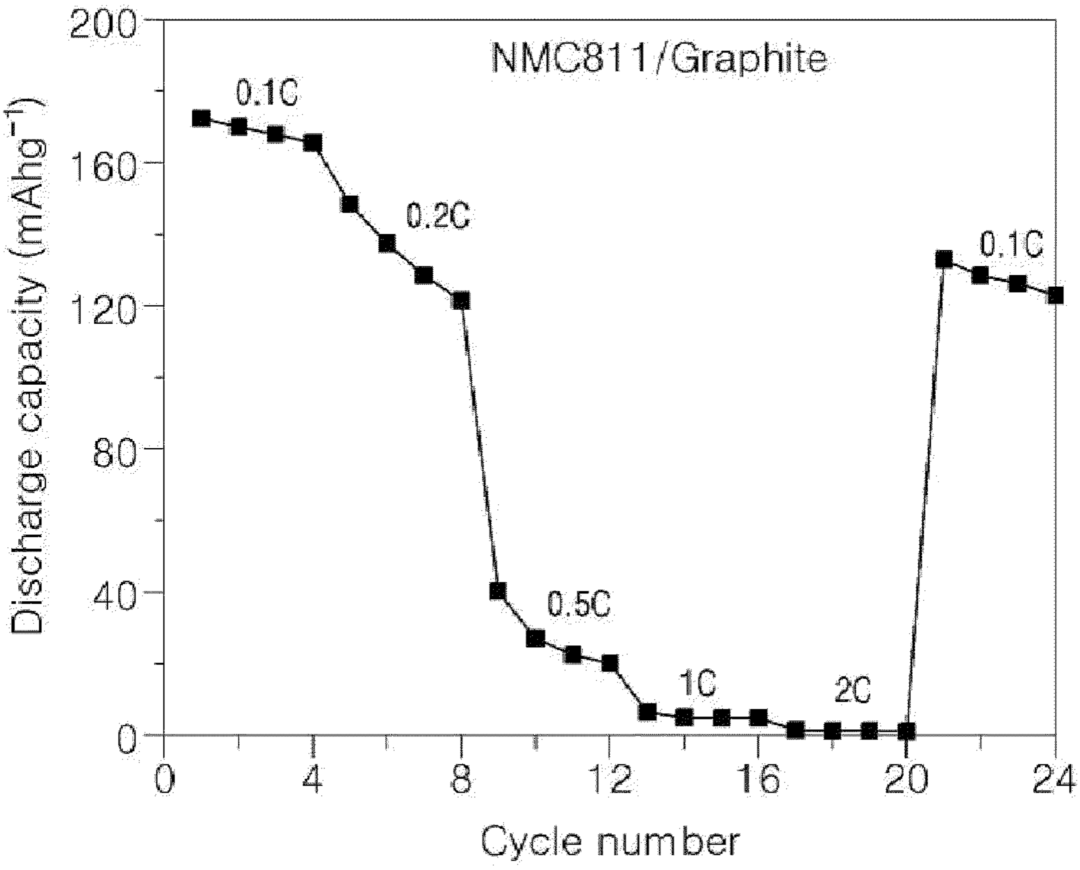
NMC811/Graphite
0.1C
0.2C
0.5C
1C
2C
0.1C
Discharge capacity (mAhg$^{-1}$)
0
40
80
120
160
200
0
4
8
12
16
20
24
Cycle number

Europäisches Patentamt
European Patent Office
Office européen des brevets

# EUROPEAN SEARCH REPORT

Application Number
EP 25 20 4451

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | JP 7 229854 B2 (MAXELL HOLDINGS LTD) 28 February 2023 (2023-02-28) * paragraphs [0058] - [0060], [0062], [0063] * * claim 1 * | 1-15 | INV. H01M10/052 H01M10/056 |
| Y | CN 116 666 744 A (GM GLOBAL TECH OPERATIONS LLC) 29 August 2023 (2023-08-29) * claims 1-10 * * paragraphs [0006], [0008], [0012] * | 1-15 | |
| Y | KR 101 887 819 B1 (ULSAN NAT INST SCIENCE & TECH UNIST [KR]) 10 August 2018 (2018-08-10) * claims 1,3 * | 9 | |
| A | US 2021/098829 A1 (RUSTOMJI CYRUS SAM [US] ET AL) 1 April 2021 (2021-04-01) * paragraphs [0026], [0041] * * claims 1-10 * | 1-15 | TECHNICAL FIELDS SEARCHED (IPC) |
| A | WO 2024/080613 A1 (LG ENERGY SOLUTION LTD [KR]) 18 April 2024 (2024-04-18) * paragraphs [0022], [0026] * * claims 1-14 * | 1-15 | H01M |
| A | KR 2017 0060225 A (KERI KOREA ELECTROTECHNOLOGY RES INST [KR]) 1 June 2017 (2017-06-01) * paragraph [0030] * * claims 1-11 * | 1-15 | |

The present search report has been drawn up for all claims

1

| Place of search | Date of completion of the search | Examiner |
|---|---|---|
| The Hague | 6 February 2026 | Reich, Claus |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
& : member of the same patent family, corresponding document

EPO FORM 1503 03.82 (P04C01)

# ANNEX TO THE EUROPEAN SEARCH REPORT ON EUROPEAN PATENT APPLICATION NO.

EP 25 20 4451

This annex lists the patent family members relating to the patent documents cited in the above-mentioned European search report. The members are as contained in the European Patent Office EDP file on
The European Patent Office is in no way liable for these particulars which are merely given for the purpose of information.

06-02-2026

| Patent document cited in search report | Publication date | Patent family member(s) | Publication date |
|---|---|---|---|
| JP 7229854 B2 | 28-02-2023 | JP 7229854 B2 | 28-02-2023 |
| | | JP 2020198232 A | 10-12-2020 |
| CN 116666744 A | 29-08-2023 | CN 116666744 A | 29-08-2023 |
| | | DE 102022117456 A1 | 24-08-2023 |
| | | US 2023268551 A1 | 24-08-2023 |
| KR 101887819 B1 | 10-08-2018 | NONE | |
| US 2021098829 A1 | 01-04-2021 | CA 3153170 A1 | 08-04-2021 |
| | | CA 3153183 A1 | 08-04-2021 |
| | | CA 3214832 A1 | 08-04-2021 |
| | | CN 114450768 A | 06-05-2022 |
| | | CN 114503325 A | 13-05-2022 |
| | | CN 115719829 A | 28-02-2023 |
| | | EP 4038651 A1 | 10-08-2022 |
| | | EP 4038685 A1 | 10-08-2022 |
| | | JP 7253861 B2 | 07-04-2023 |
| | | JP 7541764 B2 | 29-08-2024 |
| | | JP 7640824 B2 | 06-03-2025 |
| | | JP 2022545132 A | 25-10-2022 |
| | | JP 2022548332 A | 17-11-2022 |
| | | JP 2023093442 A | 04-07-2023 |
| | | KR 20220051018 A | 25-04-2022 |
| | | KR 20220051019 A | 25-04-2022 |
| | | KR 20220156976 A | 28-11-2022 |
| | | KR 20230035465 A | 13-03-2023 |
| | | US 2021098204 A1 | 01-04-2021 |
| | | US 2021098829 A1 | 01-04-2021 |
| | | WO 2021066975 A1 | 08-04-2021 |
| | | WO 2021066976 A1 | 08-04-2021 |
| WO 2024080613 A1 | 18-04-2024 | CN 119137782 A | 13-12-2024 |
| | | EP 4492523 A1 | 15-01-2025 |
| | | JP 2025517717 A | 10-06-2025 |
| | | US 2025293291 A1 | 18-09-2025 |
| | | WO 2024080613 A1 | 18-04-2024 |
| KR 20170060225 A | 01-06-2017 | NONE | |



For more details about this annex : see Official Journal of the European Patent Office, No. 12/82